# EUROPÄISCHE PATENTSCHRIFT

(11) **EP 4 178 816 B1**
(45) Veröffentlichungstag und Bekanntmachung des Hinweises auf die Patenterteilung: **12.02.2025**
(21) Anmeldenummer: 21736280.5
(22) Anmeldetag: 23.06.2021
(51) Int. Cl.: B60G 17/019, G01D 5/14, G01B 5/24

(54) **FAHRWERKBAUTEIL MIT EINEM GELENKINNENTEIL**
CHASSIS COMPONENT WITH A JOINT INNER PART
COMPOSANT DE CHÂSSIS DOTÉ D'UNE PARTIE INTERNE DE JOINT

(30) Priorität: 07.07.2020 DE 102020208490
(43) Veröffentlichungstag der Anmeldung: 17.05.2023
(73) Patentinhaber: ZF Friedrichshafen AG, 88046 Friedrichshafen (DE)
(72) Erfinder: BERGER, Artur, 49163 Bohmte (DE); RICHTER, Thomas, 49401 Damme (DE)
(74) Vertreter: ZF Friedrichshafen AG
(86) Internationale Anmeldenummer: PCT/EP2021/067073
(87) Internationale Veröffentlichungsnummer: WO 2022/008238

(56) Entgegenhaltungen:
- DE-A1- 10 221 873
- DE-A1- 102006 003 622
- DE-A1- 102007 028 265
- DE-A1- 102008 045 165
- FR-A1- 2 973 292

## Beschreibung

Die Erfindung betrifft ein Fahrwerkbauteil mit einem Gelenkinnenteil mit den Merkmalen des Oberbegriffs des Anspruchs 1.

Ein derartiges Fahrwerkbauteil ist aus der DE 10 2007 028 265 A1 bekannt. Weitere ähnliche Ausführungen sind der FR 2 973 292 A1 oder DE 102 21 873 A1 zu entnehmen.

Gemäß der DE 10 2019 201 521 A1 ist bekannt, dass die Messeinrichtung unter anderem eine stiftartige Sensorstrebe aufweist, die in eine sacklochartige Vertiefung des Strukturteils eingesteckt ist.

Jedoch bietet nicht jedes Strukturteil die Möglichkeit der Ausbildung einer sacklochartigen Vertiefung zum Anordnen eines Messelementes innerhalb der Vertiefung, da massivere Eingriffe und/oder Bearbeitungen des Strukturteils zum Aufnehmen eines Messelementes die Festigkeit des Strukturteils auf unerwünschte Weise schwächen können.

Des Weiteren ist es aus dem Stand der Technik bekannt, das dem Gelenkinnenteil zugeordnete Messelement möglichst nah zum Zentrum eines Kinematikpunktes und/oder eines Gelenkmittelpunktes des Gelenkinnenteils anzuordnen. Beispielsweise wird ein entsprechendes Messelement innerhalb einer Gelenkkugel eines Gelenkinnenteils oder innerhalb eines Gummimaterials eines Gummilagers angeordnet. Dies ist zumindest teilweise jedoch mit einem erhöhten Herstellungs- und/oder Kostenaufwand verbunden.

Es ist die der Erfindung zu Grunde liegende Aufgabe, ein Fahrwerkbauteil der eingangs genannten Art derart weiterzuentwickeln, dass eine Anordnung der Messeinrichtung, des ersten Messelementes und/oder des zweiten Messelementes vereinfacht und/oder kostengünstiger realisierbar ist. Insbesondere soll eine alternative Ausführungsform bereitgestellt werden.

Die der Erfindung zu Grunde liegende Aufgabe wird mit einem Fahrwerkbauteil nach Anspruch 1 gelöst. Bevorzugte Weiterbildungen der Erfindung finden sich in den Unteransprüchen und in der nachfolgenden Beschreibung.

Demnach betrifft die Erfindung ein Fahrwerkbauteil. Insbesondere ist das Fahrwerkbauteil in einem Fahrwerk eines Fahrzeugs, vorzugsweise eines Kraftfahrzeugs, angeordnet. Bei einem Fahrwerkbauteil kann es sich im Allgemeinen um einen Fahrwerkträger, einen Querträger, einen Achsträger, ein Flanschgelenk, einen Radträger oder einen Fahrwerkslenker handeln.

Das Fahrwerkbauteil weist ein Gelenkinnenteil auf. Des Weiteren hat das Fahrwerkbauteil ein Strukturteil, wobei das Gelenkinnenteil in einer Gelenkaufnahme des Strukturteils gelenkbeweglich gelagert ist. Insbesondere ist mittels des in der Gelenkaufnahme gelenkbeweglich gelagerten Gelenkinnenteils ein Gelenk des Fahrwerkbauteils ausgebildet. Das Gelenk kann als ein Kugelgelenk, insbesondere ein Kugelhülsengelenk, oder ein Kugelzapfengelenk ausgebildet sein. Des Weiteren kann das Gelenk als ein Gummigelenk realisiert sein.

Das Fahrwerkbauteil weist eine Messeinrichtung zum Bestimmen einer relativen Lage des Gelenkinnenteils in Bezug zum Strukturteil auf. Insbesondere ist die Messeinrichtung als eine Winkelmesseinrichtung ausgebildet. Die Messeinrichtung hat ein erstes Messelement und ein zweites Messelement. Hierbei ist das erste Messelement am Strukturteil und das zweite Messelement am Gelenkinnenteil angeordnet. Das Strukturteil kann eine Kontur oder Grundform des Fahrwerkbauteils vorgeben bzw. definieren. Insbesondere ist die Gelenkaufnahme des Strukturteils als ein Durchbruch oder als eine Durchgangsöffnung in dem Strukturteil ausgebildet. Alternativ kann die Gelenkaufnahme des Strukturteils topfartig und/oder becherartig ausgebildet sein. Insbesondere sind das Strukturteil und das Gelenkinnenteil relativ zueinander verdrehbar, verschwenkbar und/oder verkippbar ausgebildet. Mittels der Messeinrichtung kann eine relative Verdrehung, Verschwenkung und/oder Verkippung des Strukturteils zum Gelenkinnenteil und um mindestens eine Drehachse oder mehrere Drehachsen erfasst werden. Insbesondere wirken das erste Messelement und das zweite Messelement zum Bestimmen der relativen Lage zwischen dem Gelenkinnenteil und dem Strukturteil zusammen. Hierbei erstreckt sich das Gelenkinnenteil aus der Gelenkaufnahme heraus, wobei das zweite Messelement an einem sich außerhalb der Gelenkaufnahme befindenden Abschnitt des Gelenkinnenteils befestigt ist.

Hierbei ist von Vorteil, dass das zweite Messelement weder innerhalb des Gelenkinnenteils noch innerhalb der Gelenkaufnahme angeordnet ist. Stattdessen ist das zweite Messelement an einem sich außerhalb der Gelenkaufnahme befindenden Abschnitt des Gelenkinnenteils befestigt. Hierdurch ist gewährleistet, dass sich das zweite Messelement zusammen mit dem Gelenkinnenteil und in Bezug zum Strukturteil bewegt bzw. bewegen lässt. Zugleich ist der Herstellungs- und/oder Kostenaufwand zum Anordnen des zweiten Messelementes an dem Gelenkinnenteil reduziert. Auch das Anordnen des mit dem zweiten Messelement zusammenwirkenden ersten Messelementes an dem Strukturteil ist durch die Anordnung des zweiten Messelementes an einem sich außerhalb der Gelenkaufnahme befindenden Abschnitt des Gelenkinnenteils einfacher und/oder kostengünstiger realisierbar.

Gemäß einer Weiterbildung ist das erste Messelement an einer Oberfläche und/oder an einem ebenen Oberflächenabschnitt des Strukturteils befestigt. Insbesondere ist das erste Messelement benachbart zu der Gelenkaufnahme und/oder zum zweiten Messelement an der Oberfläche und/oder den ebenen Oberflächenabschnitt befestigt. Aufgrund der Anordnung des ersten Messelementes an der Oberfläche und/oder dem ebenen Oberflächenabschnitt wird die Festigkeit des Strukturteils nicht oder zumindest nicht wesentlich beeinträchtigt. Zum Ausbilden des ebenen Oberflächenabschnittes kann die Oberfläche des Strukturteils, insbesondere spanend, bearbeitet sein.

Vorzugsweise weist das Strukturteil eine Befestigungsaufnahme zum Befestigen des ersten Messelementes an der Oberfläche und/oder an dem ebenen Oberflächenabschnitt auf. Hierzu kann die Befestigungsaufnahme mit einem geeignet ausgebildeten Befestigungsmittel zusammenwirken. Ein solches Befestigungsmittel kann als eine Schraube, ein Stift oder als ein Niet ausgebildet sein. Das Befestigungsmittel kann in die Befestigungsaufnahme eingeschraubt, eingepresst und/oder eingegossen sein. Die Befestigungsaufnahme kann sacklochartig ausgebildet sein. Da die Befestigungsaufnahme jedoch ausschließlich zum Aufnehmen des Befestigungsmittels und nicht zum teilweisen oder vollständigen Aufnehmen des ersten Messelementes selbst ausgebildet ist, ist die Festigkeit des Strukturteils nicht wesentlich beeinträchtigt.

Nach einer weiteren Ausführungsform weist das erste Messelement ein Ausrichtelement zum gerichteten Anordnen und/oder Befestigen an dem Strukturteil auf. Insbesondere weist das Strukturteil eine Ausrichtaufnahme zum Aufnehmen des Ausrichtelementes auf. Vorzugsweise ist das Ausrichtelement formschlüssig in einer Ausrichtaufnahme des Strukturteils aufgenommen und/oder eingesteckt. Das Ausrichtelement kann als ein Vorsprung oder als eine Nase des ersten Messelementes ausgebildet sein. Aufgrund des Zusammenwirkens des Ausrichtelementes mit der Ausrichtaufnahme, insbesondere in Kombination mit dem Zusammenwirken der Befestigungsaufnahme und dem Befestigungsmittel, ist eine vorgegebene Orientierung des ersten Messelementes bzw. eine vorgegebene Ausrichtung des ersten Messelementes in Bezug zum Strukturteil und/oder zum zweiten Messelement gewährleistet. Vorzugsweise ist aufgrund des Zusammenwirkens des Ausrichtelementes mit der Ausrichtaufnahme, insbesondere in Kombination mit dem Zusammenwirken der Befestigungsaufnahme mit dem Befestigungsmittel, ein unerwünschtes Verdrehen des ersten Messelementes in Bezug zum Strukturteil auf zuverlässige Weise verhindert oder blockiert.

Gemäß einer Weiterbildung ist der Abschnitt des Gelenkinnenteils mit dem zweiten Messelement als ein, insbesondere gestuftes, freies Ende des Gelenkinnenteils ausgebildet. Hierbei kann das freie Ende des Gelenkinnenteils eine einfach gestufte Außenkontur aufweisen. Insbesondere ist ein Außendurchmesser eines äußeren Stufenabschnittes des Gelenkinnenteils aufgrund der gestuften Außenkontur kleiner als ein axial in Bezug zu einer Mittellängsachse des Gelenkinnenteils und des äußeren Stufenabschnittes innerer Stufenabschnitt des Gelenkinnenteils.

Das zweite Messelement kann einen ringartigen Halteabschnitt aufweisen. Vorzugsweise ist der ringartige Halteabschnitt des zweiten Messelementes auf den Abschnitt, insbesondere den äußeren Stufenabschnitt, des Gelenkinnenteils aufgesteckt und/oder aufgepresst. Hierbei kann der innere Stufenabschnitt als eine Anlage für den Halteabschnitt dienen. Insbesondere ist der ringartige Halteabschnitt auf einen Außenumfang des Abschnittes des Gelenkinnenteils aufgesteckt und/oder aufgepresst. Auf diese Weise lässt sich das zweite Messelement auf einfache und kostengünstige Weise mit dem Gelenkinnenteil verbinden.

Vorzugsweise bilden das zweite Messelement, insbesondere der Halteabschnitt des zweiten Messelementes, und der mit dem zweiten Messelement zusammenwirkende Abschnitt des Gelenkinnenteils eine Verdrehsicherung zum Verhindern und/oder Blockieren einer Relativbewegung und/oder Rotation des zweiten Messelementes in Bezug zum Gelenkinnenteil, insbesondere um eine Mittellängsachse des Gelenkinnenteils, aus. Somit ist mittels der Verdrehsicherung eine Relativbewegung zwischen dem zweiten Messelement und dem Gelenkinnenteil verhindert bzw. blockiert. Die Verdrehsicherung kann mittels mindestens einer Abflachung an einem Außenumfang des Abschnittes des Gelenkinnenteils ausgebildet sein, die mit einer korrespondierend ausgebildeten weiteren Abflachung an einem Innenumfang des zweiten Messelementes, insbesondere des Halteabschnittes des zweiten Messelementes, zusammenwirkt. Insbesondere wirken die Abflachung am Außenumfang des Abschnittes des Gelenkinnenteils und die weitere Abflachung am Innenumfang des zweiten Messelementes formschlüssig zusammen. Ein derartiger Formschluss bzw. derartige Abflachungen sind auf einfache und kostengünstige Weise herstellbar. Alternativ kann der Abschnitt des Gelenkinnenteils einen polygonen oder unrunden Außenumfang aufweisen, der mit einem korrespondierend ausgebildeten polygonen oder unrunden Innenumfang des zweiten Messelementes zusammenwirkt. Auch hierüber ist auf einfache Weise eine effektive Verdrehsicherung realisierbar.

Vorzugsweise weist das erste Messelement mindestens einen Magnetfeldsensor und das zweite Messelement einen Magnet auf. Der Magnet kann als ein Permanentmagnet ausgebildet sein. Der Magnet erzeugt, ohne dass Energie von außen zugeführt werden muss, ein Magnetfeld, welches mit dem Magnetfeldsensor des ersten Messelementes in Wirkverbindung steht. Insbesondere weist das erste Messelement mehrere, vorzugsweise drei, Magnetfeldsensoren auf. Insbesondere sind die mehreren Magnetfeldsensoren entlang und/oder benachbart einer Bewegungsbahn des Magneten beim üblichen Gebrauch des Fahrwerkbauteils angeordnet. Mittels der mehreren Magnetfeldsensoren kann eine Signalqualität der Messeinrichtung vergrö-βert und/oder verbessert werden. Der Magnetfeldsensor kann als ein Hall-Sensor ausgebildet sein.

Der Magnet ist an einem freien Ende eines stegartigen Vorsprungs des zweiten Messelementes angeordnet. Hierbei ist der Magnet und/oder der stegartige Vorsprung derart ausgerichtet, dass dieser dem ersten Messelement und/oder dem Magnetfeldsensor zugewandt ist. Vorzugsweise sind das erste Messelement und das zweite Messelement derart zueinander ausgerichtet und/oder angeordnet, so dass ein Abstand zwischen dem Magnet und dem Magnetfeldsensor kleiner als 10 mm ist. Vorzugsweise erstreckt sich der stegartige Vorsprung in radialer Richtung von einem Halteabschnitt des zweiten Messelementes über einen Außenumfang des Gelenkinnenteils hinaus nach außen. Vorzugsweise ist der stegartige Vorsprung und der Halteabschnitt des zweiten Messelementes einstückig ausgebildet.

Gemäß einer Weiterbildung ist der Magnet innerhalb eines Magnethalters aus Kunststoff angeordnet und/oder gekapselt. Hierdurch kann der Magnet vor Umwelteinflüssen, Verschmutzungen und/oder Steinschlag geschützt werden. Insbesondere ist der Magnet und/oder der Magnethalter mittels einer lösbaren Steck- und/oder Rastverbindung an dem stegartigen Vorsprung befestigt. Aufgrund der lösbaren Steck- und/oder Rastverbindung kann der Magnet bei Bedarf auf einfache Weise gewechselt oder ausgetauscht werden. Zum Ausbilden der Steck- und/oder Rastverbindung können der Magnethalter und der stegartige Vorsprung korrespondierend zueinander ausgebildete Formschlusselemente, insbesondere mindestens eine Rastnase und mindestens eine Rastaufnahme, aufweisen. Alternativ kann der Magnethalter mittels eines Spritzgussverfahrens unmittelbar an dem stegartigen Vorsprung hergestellt und/oder angespritzt sein.

Erfindungsgemäß ist das zweite Messelement, insbesondere ein Magnet des zweiten Messelementes, mindestens teilweise innerhalb einer Führung des ersten Messelementes geführt. Somit weist das erste Messelement eine Führung zum Führen des zweiten Messelementes, insbesondere des Magneten des zweiten Messelementes, auf. Hierbei ist mittels der Führung ein Verdrehen des zweiten Messelementes um eine Mittellängsachse des Gelenkinnenteils ermöglicht. Zugleich kann mittels der Führung ein Verkippen mindestens eines Teils des zweiten Messelementes, insbesondere des Magneten des zweiten Messelementes, axial zu der Mittellängsachse mindestens teilweise oder vollständig kompensiert, ausgeglichen und/oder blockiert werden. Mit anderen Worten wird somit mittels der Führung ein Verdrehen des zweiten Messelementes um die Mittellängsachse des Gelenkinnenteils ermöglicht und zugleich ein Verkippen mindestens des Magneten des zweiten Messelementes um eine Drehachse quer oder rechtwinklig zur Mittellängsachse des Gelenkinnenteils mindestens teilweise oder vollständig kompensiert, ausgeglichen und/oder blockiert. Hierdurch können unerwünschte Störgrößen aufgrund des Verkippens des Magneten um die quer oder rechtwinklig zur Mittellängsachse angeordnete Drehachse vermieden werden.

Erfindungsgemäß weist ein stegartiger Vorsprung des zweiten Messelementes einen ersten Vorsprungabschnitt und einen zweiten Vorsprungabschnitt auf. Der erste Vorsprungabschnitt und der zweite Vorsprungabschnitt sind mittels eines Scharniers schwenkbeweglich miteinander verbunden sein. Hierbei ist mittels des Scharniers eine Kippbewegung des zweiten Messelementes in axialer Richtung zur Mittellängsachse des Gelenkinnenteils und/oder um eine quer oder rechtwinklig zur Mittellängsachse angeordnete Drehachse ausgleichbar.

Insbesondere ist das Gelenkinnenteil als eine Kugelhülse, als eine Gelenkhülse oder als ein Gummilager ausgebildet. Ein in Kombination des Gelenkinnenteils mit der Gelenkaufnahme des Strukturteils ausgebildetes Gelenk kann als ein Kugelgelenk oder Gummigelenk ausgebildet sein. Vorzugsweise wirkt die Gelenkhülse mit einem Gummilager innerhalb der Gelenkaufnahme zum Ausbilden eines Gummigelenks zusammen. Die Ausbildung der Messeinrichtung ist aufgrund der Anordnung des zweiten Messelementes an dem sich außerhalb der Gelenkaufnahme befindenden Abschnitt des jeweiligen Gelenkinnenteils erheblich vereinfacht. Das Fahrwerkbauteil kann als ein Lenker, beispielsweise ein Zweipunktlenker, ausgebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: einen Ausschnitt einer perspektivischen und teilweise transparenten Seitenansicht eines nicht-erfindungsgemäßen ersten Fahrwerkbauteils,
- Fig. 2: einen Ausschnitt einer geschnittenen Seitenansicht des nicht-erfindungsgemäßen ersten Fahrwerkbauteils gemäß Fig. 1,
- Fig. 3: einen Ausschnitt einer teilweise transparenten Draufsicht auf das nichterfindungsgemäße erste Fahrwerkbauteil gemäß Fig. 1 und 2 mit einem zweiten Messelement in drei verschiedenen Positionen,
- Fig. 4: einen Ausschnitt einer teilweise transparenten Seitenansicht des nicht-erfindungsgemäßen ersten Fahrwerkbauteils gemäß Fig. 1 und 2 mit dem zweiten Messelement in drei weiteren verschiedenen Positionen,
- Fig. 5: einen Ausschnitt einer perspektivischen teilweise transparenten Draufsicht auf ein erstes Messelement mit einem Magnetfeldsensor und ein zweites Messelement mit einem Magnet im Sinne des nicht-erfindungsgemäßen ersten Fahrwerkbauteils gemäß Fig. 1 und 2,
- Fig. 6: einen Ausschnitt einer perspektivischen und teilweise transparenten Seitenansicht eines nicht-erfindungsgemäßen zweiten Fahrwerkbauteils,
- Fig. 7: einen Ausschnitt einer geschnittenen Seitenansicht des nicht-erfindungsgemäßen zweiten Fahrwerkbauteils gemäß Fig. 6,
- Fig. 8: einen Ausschnitt einer teilweise transparenten Draufsicht auf das nichterfindungsgemäße zweite Fahrwerkbauteil gemäß Fig. 6 und 7 mit einem zweiten Messelement in drei verschiedenen Positionen,
- Fig. 9: einen Ausschnitt einer teilweise transparenten Seitenansicht des nicht-erfindungsgemäßen zweiten Fahrwerkbauteils gemäß Fig. 6 und 7 mit dem zweiten Messelement in drei weiteren verschiedenen Positionen,
- Fig. 10: einen Ausschnitt einer perspektivischen und teilweise transparenten Seitenansicht eines erfindungsgemäßen weiteren Fahrwerkbauteils,
- Fig. 11: einen Ausschnitt einer geschnittenen Seitenansicht des erfindungsgemäßen weiteren Fahrwerkbauteils gemäß Fig. 10,
- Fig. 12: einen Ausschnitt einer teilweise transparenten Draufsicht auf das erfindungsgemäße weitere Fahrwerkbauteil gemäß Fig. 10 und 11 mit einem zweiten Messelement in drei verschiedenen Positionen, und
- Fig. 13: einen Ausschnitt einer teilweise transparenten Seitenansicht des erfindungsgemäßen weiteren Fahrwerkbauteils gemäß Fig. 10 und 11 mit dem zweiten Messelement in drei weiteren verschiedenen Positionen.

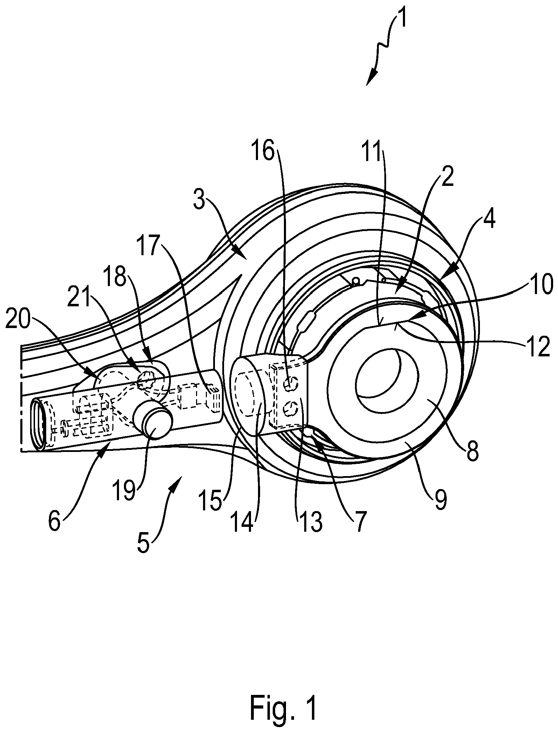

Figur 1 zeigt einen Ausschnitt einer perspektivischen und teilweise transparenten Seitenansicht eines nicht-erfindungsgemäßen ersten Fahrwerkbauteils 1. Das Fahrwerkbauteil 1 weist ein Gelenkinnenteil 2 und ein Strukturteil 3 auf. Das Gelenkinnenteil 2 ist bei diesem Ausführungsbeispiel als eine Gelenkhülse aus Metall ausgebildet. Das Strukturteil 3 bestimmt die Grundform des Fahrwerkbauteils 1. Das Strukturteil 3 ist in sich stabil bzw. formstabil ausgebildet und ist bei diesem Ausführungsbeispiel aus Metall hergestellt. Des Weiteren weist das Strukturteil 3 eine Gelenkaufnahme 4 auf. Die Gelenkaufnahme 4 ist hier als Durchbruch bzw. eine Durchgangsöffnung in dem Strukturteil 3 ausgebildet. Das Gelenkinnenteil 2 ist in der Gelenkaufnahme 4 gelenkbeweglich gelagert.

Des Weiteren weist das Fahrwerkbauteil 1 eine Messeinrichtung 5 auf. Die Messeinrichtung 5 ist zum Bestimmen einer relativen Lage des Gelenkinnenteils 2 in Bezug zum Strukturteil 3 ausgebildet. Hierzu weist die Messeinrichtung 5 ein erstes Messelement 6 und ein zweites Messelement 7 auf. Das erste Messelement 6 ist am Strukturteil 3 und das zweite Messelement 7 ist am Gelenkinnenteil 2 angeordnet bzw. befestigt. Das erste Messelement 6 ist hier teiltransparent dargestellt.

Das Gelenkinnenteil 2 erstreckt sich aus der Gelenkaufnahme 4 heraus. Hierbei ist das zweite Messelement 7 an einem sich außerhalb der Gelenkaufnahme 4 befindenden Abschnitt 8 des Gelenkinnenteils 2 befestigt. Hierbei ist der Abschnitt 8 des Gelenkinnenteils 2 als ein einfach gestuftes freies Ende des Gelenkinnenteils 2 ausgebildet. Das zweite Messelement 7 weist einen ringartigen Halteabschnitt 9 auf. Der ringartige Halteabschnitt 9 ist auf den gestuften Abschnitt 8 des Gelenkinnenteils 2 bzw. auf einen Außenumfang des Abschnittes 8 aufgepresst.

Hierbei bilden der Halteabschnitt 9 und der mit diesem Halteabschnitt 9 zusammenwirkende Abschnitt 8 des Gelenkinnenteils 2 eine Verdrehsicherung 10 zum Verhindern bzw. Blockieren einer Relativbewegung bzw. einer Rotation des zweiten Messelementes 7 in Bezug zum Gelenkinnenteil 2. Bei diesem Ausführungsbeispiel ist die Verdrehsicherung 10 mittels einer Abflachung 11 am Außenumfang des Abschnittes 8 des Gelenkinnenteils 2 ausgebildet, die mit einer korrespondierend ausgebildeten weiteren Abflachung 12 an einem Innenumfang des Halteabschnittes 9 zusammenwirkt.

Das zweite Messelement 7 weist einen stegartigen Vorsprung 13 auf. Der stegartige Vorsprung 13 erstreckt sich in radialer Richtung von dem Halteabschnitt 9 und in Bezug zu einer hier nicht näher dargestellten Mittellängsachse des Gelenkinnenteils 2 über den Außenumfang des Gelenkinnenteils 2 hinaus nach außen. An einem freien Ende des stegartigen Vorsprungs 13 ist ein Magnet 14 des zweiten Messelementes 7 angeordnet. Der Magnet 14 ist dem ersten Messelement 6 zugewandt ausgerichtet. Bei diesem Ausführungsbeispiel ist der Magnet 14 an einer Stirnseite eines freien Endes des Vorsprungs 13 angeordnet. Die Stirnseite ist hierbei dem ersten Messelement 6 zugewandt. Insbesondere ist eine Ebene der Stirnseite zumindest in der hier dargestellten unausgelenkten Position des Gelenkinnteils 2 parallel zur Mittellängsachse des Gelenkinnenteils 2 ausgerichtet.

Der Magnet 14 innerhalb eines Magnethalters 15 angeordnet. Der Magnethalter 15 ist hier teiltransparent dargestellt. Der Magnethalter 15 ist aus einem Kunststoff gebildet, wobei der Magnet 14 vollständig von dem Kunststoff des Magnethalters 15 umgeben ist. Bei diesem Ausführungsbeispiel weist der stegartige Vorsprung 13 zwei Löcher 16 auf. Für eine bessere Übersichtlichkeit ist lediglich ein einzelnes Loch 16 mit einem Bezugszeichen versehen. Der Magnethalter 15 ist direkt an das freie Ende des stegartigen Vorsprungs angespritzt. Hierbei durchdringt das Kunststoffmaterial des Magnethalters 15 die Löcher 16, wodurch der Magnethalter 15 zuverlässig und unter Ausschluss von Relativbewegungen zwischen dem Magnethalter 15 und dem Vorsprung 13 an diesem befestigt ist.

Das erste Messelement 6 weist einen Magnetfeldsensor 17 auf. Hierbei ist der Magnetfeldsensor 17 dem Magnet 14 des zweiten Messelementes 7 zugewandt. Zwischen dem Magnetfeldsensor 17 und dem Magnet 14 ergibt sich ein Abstand von weniger als 10 mm. Das erste Messelement 6 ist an einem ebenen Oberflächenabschnitt 18 des Strukturteils 3 und benachbart zur Gelenkaufnahme 4 befestigt. Bei diesem Ausführungsbeispiel ist der ebene Oberflächenabschnitt 18 mittels einer spanenden Bearbeitung am Strukturteil 3 ausgebildet. Das erste Messelement 6 ist mittels eines Befestigungsmittels 19 an dem Strukturteil 3 befestigt. Zum Zusammenwirken mit dem Befestigungsmittel 19 weist das Strukturteil 3 eine Befestigungsaufnahme 20 auf. Bei diesem Ausführungsbeispiel ist das Befestigungsmittel 19 als eine Schraube ausgebildet, die in die Befestigungsaufnahme 20 eingeschraubt ist.

Des Weiteren weist das Strukturteil 3 bei diesem Ausführungsbeispiel eine Ausrichtaufnahme 21 auf. Die Ausbildung und Funktion der Ausrichtaufnahme 21 wird anhand der nachfolgenden Figur näher erläutert.

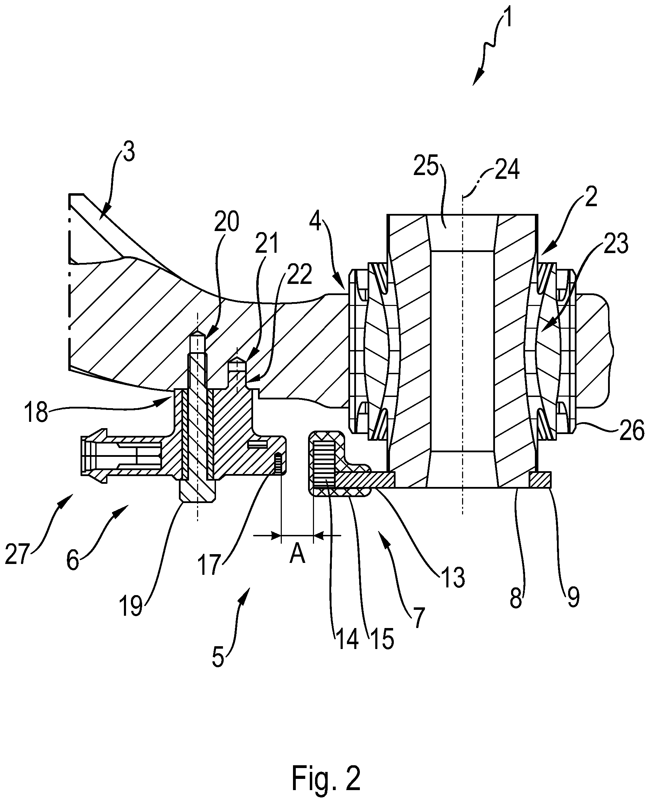

Figur 2 zeigt einen Ausschnitt einer geschnittenen Seitenansicht des nicht-erfindungsgemäßen ersten Fahrwerkbauteils1 gemäß Figur 1. Die Ausrichtaufnahme 21 ist bei diesem Ausführungsbeispiel als eine sacklochartige Vertiefung in dem Strukturteil 3 ausgebildet. Das erste Messelement 6 weist ein Ausrichtelement 22 zum gerichteten Anordnen des ersten Messelementes 6 an dem Strukturteil 3 auf. Aufgrund des Zusammenwirkens der Ausrichtaufnahme 21 mit dem Ausrichtelement 22 und in Kombination mit der Zusammenwirkung des Befestigungsmittels 19 mit der Befestigungsaufnahme 20 ergibt sich eine eindeutig vorgegebene Ausrichtung und Positionierung des ersten Messelementes 6 am Strukturteil 3 und in Bezug zum zweiten Messelement 7. Hierbei sind der Magnetfeldsensor 17 und der Magnet 14 derart zueinander ausgerichtet, dass sich ein Abstand A von weniger als 10 mm ergibt.

Das Gelenkinnenteil 2 ist bei diesem Ausführungsbeispiel als eine Gelenkhülse in Kombination mit einem Gummilager 23 ausgebildet. Das Gelenkinnenteil 2 weist eine Mittellängsachse 24 auf. Konzentrisch zur Mittellängsachse 24 weist das Gelenkinnenteil 2 eine Durchgangsöffnung 25 auf. Das Gummilager 23 ist zwischen dem Gelenkinnenteil 2 und einer Außenhülse 26 angeordnet. Die Außenhülse 26 ist bei diesem Ausführungsbeispiel aus Metall gebildet. Das Gelenkinnenteil 2 ist zusammen mit dem Gummilager 3 und der Außenhülse 26 in die Gelenkaufnahme 4 eingepresst. Hierbei bildet das Gelenkinnenteil 2 zusammen mit dem Gummilager 23 und der Außenhülse 26 ein Gummigelenk.

Das erste Messelement 6 weist an einem von dem Magnetfeldsensor 17 abgewandten Ende einen Steckerabschnitt 27 auf. Eine hier nicht näher dargestellte Signalleitung und/oder elektrische Leitung kann mittels des Steckerabschnitts 27 mit dem ersten Messelement 6 verbunden werden. Hierdurch kann ein Messsignal der Messeinrichtung 5 bzw. des ersten Messelementes 6 an eine hier nicht näher dargestellte Auswerteeinrichtung weitergeleitet werden.

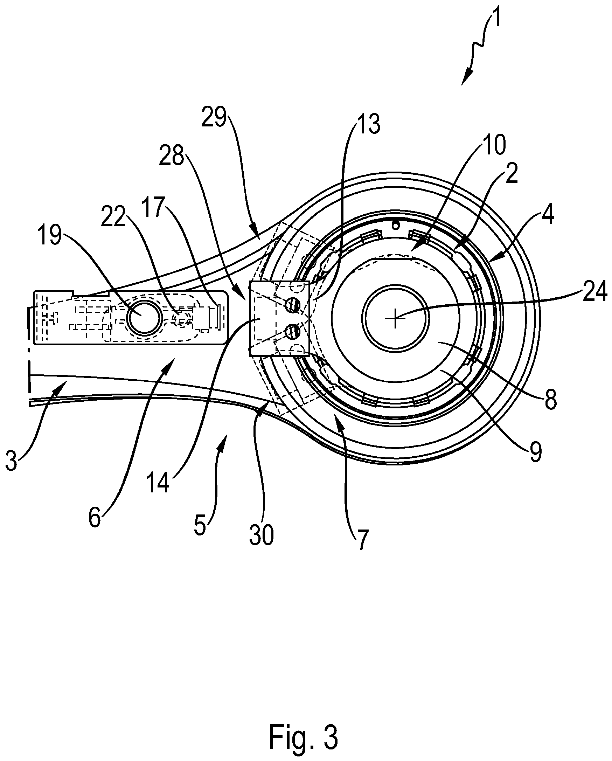

Figur 3 zeigt einen Ausschnitt einer teilweise transparenten Draufsicht auf das nichterfindungsgemäße erste Fahrwerkbauteil 1 gemäß Figuren 1 und 2 mit dem zweiten Messelement 7 in drei verschiedenen Positionen. Das zweite Messelement 7 ist einmal in einer mittleren Ausgangsposition 28 gezeigt. In der Ausgangsposition 28, die einer unausgelenkten Position des Gelenkinnenteils 2 entspricht, ist der Magnet 14 mit einem minimalen Abstand A gemäß Fig. 2 zum Magnetfeldsensor 17 ausgerichtet. Mit anderen Worten liegen in der Ausgangsposition 28 der Magnetfeldsensor 17 und der Magnet 14 einander gegenüber.

Des Weiteren ist das zweite Messelement 7 in teiltransparenten Darstellungen in zwei voneinander abweichenden Endpositionen 29, 30 dargestellt. Die Endpositionen 29, 30 ergeben sich aufgrund einer Verdrehung bzw. Rotation des Gelenkinnenteils 2 zusammen mit dem zweiten Messelement 7 um die Mittellängsachse 24. Aufgrund der hierdurch erfolgten Verlagerung des Magneten 14 kommt es zu einer für den Magnetfeldsensor 17 bestimmbaren Magnetfeldveränderung. Hierüber kann eine relative Lage des Strukturteils 3 in Bezug zum Gelenkinnenteil 2 bestimmt werden.

Bei diesem Ausführungsbeispiel ergibt sich die erste Endposition 29 ausgehend aus der Ausgangsposition 28 aufgrund einer Verdrehung um die Mittellängsachse 24 um + 25°. Die zweite Endposition 30 ergibt sich ausgehend aus der Ausgangsposition 28 aufgrund einer Verdrehung um die Mittellängsachse 24 um - 25°. Somit ergibt sich bei diesem Ausführungsbeispiel ein Winkelbereich von 50°, der von der Messeinrichtung 5 erfassbar ist.

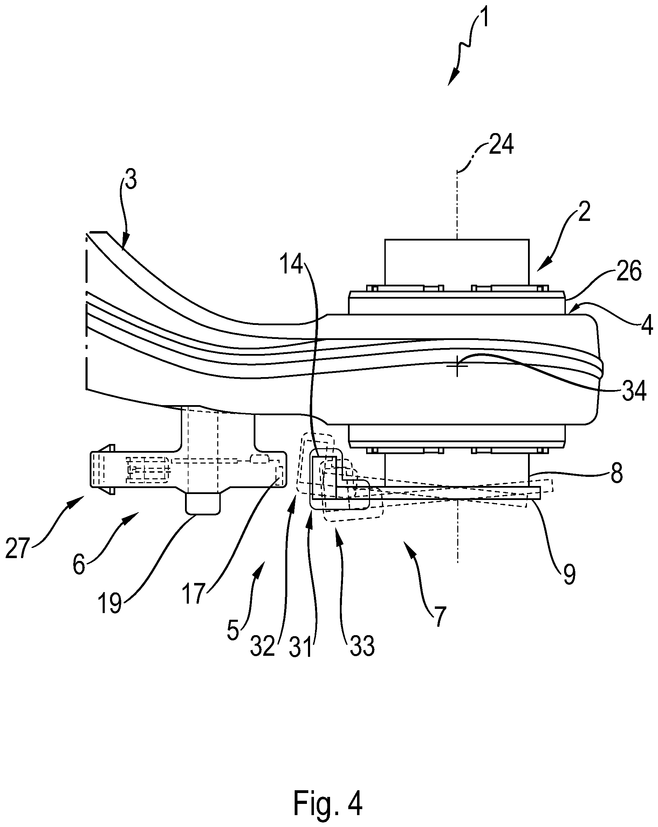

Figur 4 zeigt einen Ausschnitt einer teilweise transparenten Seitenansicht des nicht-erfindungsgemäßen ersten Fahrwerkbauteils 1 gemäß Figuren 1 und 2 und mit dem zweiten Messelement 7 in drei weiteren verschiedenen Positionen. Zum einen ist das zweite Messelement 7 in einer mittleren Ausgangsposition 31 gezeigt. Ausgehend von der Ausgangsposition 31 kann es gemäß hier dargestellten Endpositionen 32, 33 zu einem Verkippen des Gelenkinnenteils 2 um eine Drehachse 34 kommen. Hierbei ist die Drehachse 34 rechtwinklig zur Mittellängsachse 24 ausgerichtet. Zudem verläuft die Drehachse 34 durch einen Gelenkmittelpunkt des Gelenkinnenteils 2.

Ausgehend aus der Ausgangsposition 31 gelangt der Magnet 14 des zweiten Messelementes 7 aufgrund einer Verkippung um + 6° in die erste Endposition 32. Aufgrund einer Verkippung des Gelenkinnenteils 2 um die Drehachse 34 ausgehend aus der Ausgangsposition 31 um - 6°gelangt der Magnet 14 in die zweite Endposition 33. Somit ist hier ein maximaler Winkelbereich von 12° hinsichtlich eines Verkippens um die Drehachse 34 bzw. den Gelenkmittelpunkt dargestellt. Die aufgrund des Verkippens erzeugte Magnetfeldänderung kann mittels des Magnetfeldsensors 17 erfasst werden.

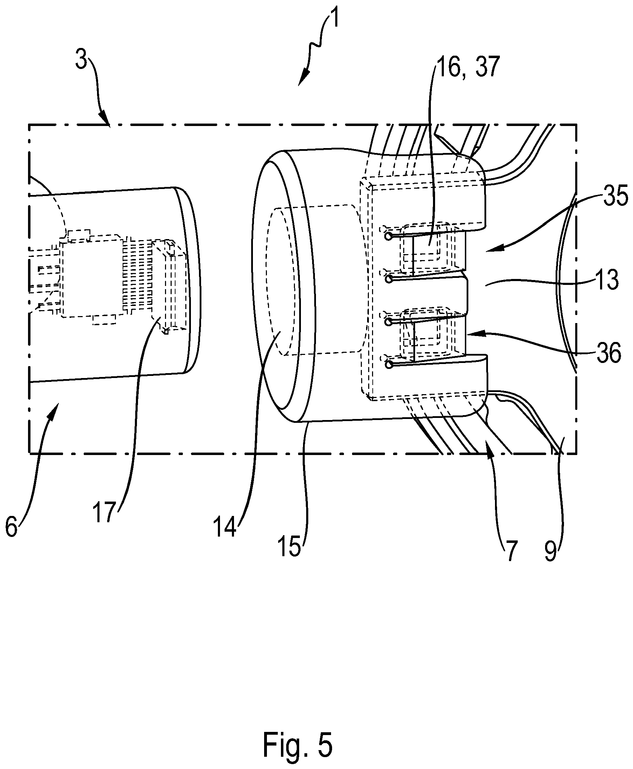

Figur 5 zeigt einen Ausschnitt einer perspektivischen teilweise transparenten Draufsicht auf das erste Messelement 6 mit dem Magnetfeldsensor 17 und das zweite Messelement 7 mit dem Magnet 14 im Sinne des nicht-erfindungsgemäßen ersten Fahrwerkbauteils 1 gemäß Figuren 1 und 2. Der Magnethalter 15 ist hier transparent dargestellt. Im Unterschied zu der Ausführung gemäß den Figuren 1 bis 4 ist der Magnethalter 15 bei der hier dargestellten Variante nicht unmittelbar an das freie Ende des stegartigen Vorsprungs 13 angespritzt. Stattdessen ist der Magnethalter 15 mittels einer lösbaren Steck- und Rastverbindung 35 an dem stegartigen Vorsprung 13 befestigt. Hierdurch ist ein Austausch oder Wechsel des Magneten 14 ermöglicht.

Zum Ausbilden der Steck- und Rastverbindung 35 weist der Magnethalter 15 bei diesem Ausführungsbeispiel Formschlusselemente 36 auf. Bei diesem Ausführungsbeispiel weist der Magnethalter 15 zwei Formschlusselemente 36 auf, wobei hier zugunsten einer besseren Übersichtlichkeit nur ein Formschlusselement 36 mit einem Bezugszeichen versehen ist. Der stegartige Vorsprung 13 weist korrespondierend zu den Formschlusselementen 36 ausgebildete Formschlusselemente 37 auf. Die Formschlusselemente 37 sind bei diesem Ausführungsbeispiel als Rastaufnahmen ausgebildet und hier mittels der Löcher 16 realisiert. Die Formschlusselemente 36 des Magnethalters 16 sind hier als Rastnasen realisiert, die formschlüssig in die Löcher 16 eingreifen bzw. einschnappen.

Bei dem Fahrwerkbauteil 1 gemäß Figuren 1 bis 5 ist der Magnetfeldsensor 17 rechtwinklig zur Längserstreckung des Strukturteils 3 ausgerichtet. Entsprechend ist auch der Magnet 14 korrespondierend zum Magnetfeldsensor 17 rechtwinklig zur Längserstreckung des Strukturteils 3 bzw. zu einer Ebene des Halteabschnitts 9 ausgerichtet bzw. innerhalb des Magnethalters 15 angeordnet.

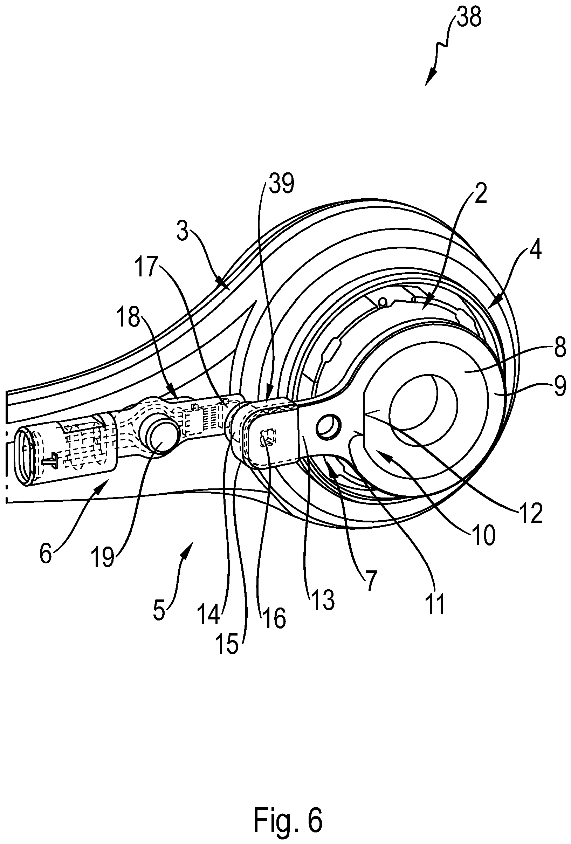

Figur 6 zeigen Ausschnitt einer perspektivischen und teilweise transparenten Seitenansicht eines nicht-erfindungsgemäßen zweiten Fahrwerkbauteils 38. Gleiche Merkmale wie zuvor tragen die gleichen Bezugszeichen. Insoweit wird zur Vermeidung von Wiederholungen auch auf die vorangegangene Beschreibung verwiesen.

Im Unterschied zu dem Fahrwerkbauteil 1 ist bei dem hier dargestellten Fahrwerkbauteil 38 der Magnet 14 nicht an einer Stirnseite des freien Endes des Vorsprungs 13 angeordnet. Stattdessen ist der Magnet 14 im Bereich einer Seite 39 des stegartigen Vorsprungs 13 angeordnet, wobei die Seite 39 dem Strukturteil 3 zugewandt ist. Der Magnetfeldsensor 17 ist zwischen dem Magnet 14 und dem Strukturteil 3 angeordnet.

Im Vergleich zum Fahrwerkbauteil 1 ergibt sich bei dem hier dargestellten Fahrwerkbauteil 38 aufgrund der Anordnung bzw. Ausrichtung des Magneten 14 und des Magnetfeldsensors 17 eine etwas flachere und damit raumsparendere Bauweise.

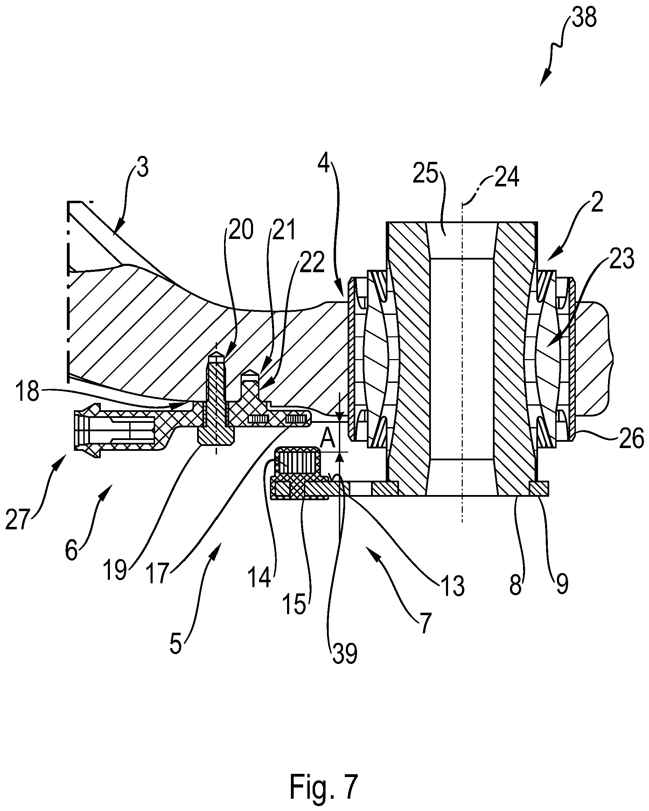

Figur 7 zeigt einen Ausschnitt einer geschnittenen Seitenansicht des nicht-erfindungsgemäßen zweiten Fahrwerkbauteils 38 gemäß Figur 6. Gleiche Merkmale wie zuvor tragen die gleichen Bezugszeichen. Insofern wird zur Vermeidung von Wiederholungen auch auf die vorangegangene Beschreibung verwiesen.

Während sich der Abstand A bei dem Fahrwerkbauteil 1 gemäß den Figuren 1 bis 5 rechtwinklig zur Mittellängsachse 24 erstreckt, erstreckt sich der Abstand A bei dem hier dargestellten Fahrwerkbauteil 38 in axialer Richtung bzw. parallel zur Mittellängsachse 24.

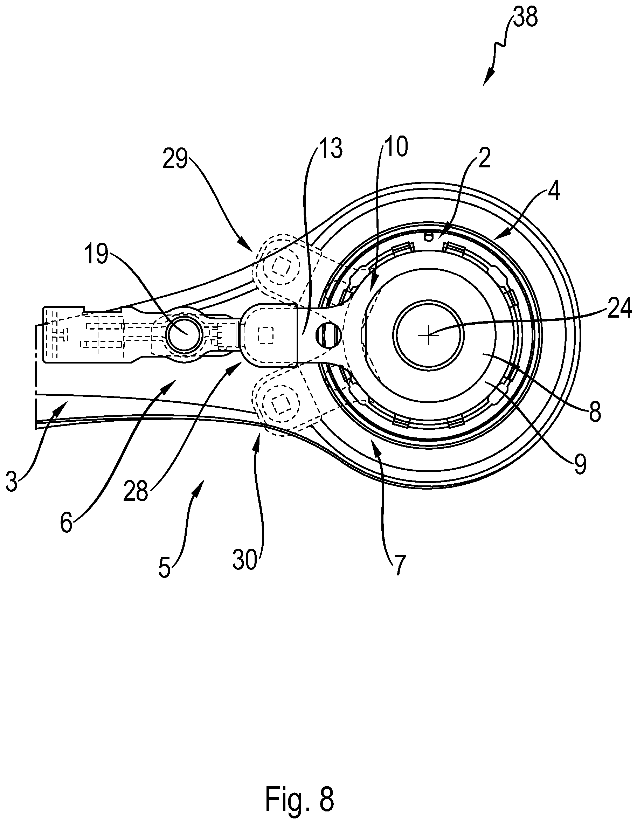

Figur 8 zeigt einen Ausschnitt einer teilweisen transparenten Draufsicht auf das nichterfindungsgemäße zweite Fahrwerkbauteil 38 gemäß Figuren 6 und 7 mit dem zweiten Messelement 7 in drei verschiedenen Positionen. Gleiche Merkmale tragen die gleichen Bezugszeichen wie zuvor. Zur Vermeidung von Wiederholungen wird insbesondere auf die vorangegangene Figur 2 verwiesen, deren Beschreibung hier entsprechend übertragbar ist.

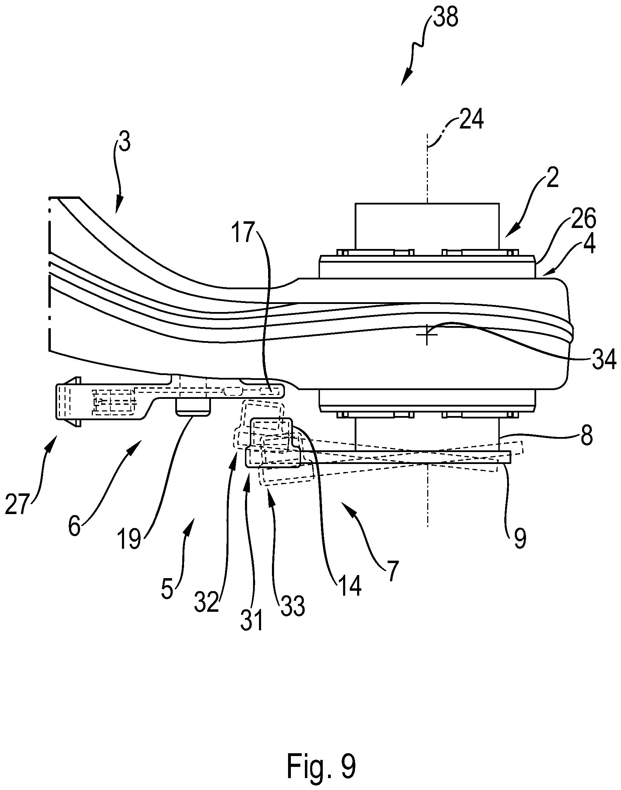

Figur 9 zeigt einen Ausschnitt einer teilweise transparenten Seitenansicht des nicht-erfindungsgemäßen zweiten Fahrwerkbauteils 38 gemäß Figuren 6 und 7 mit dem zweiten Messelement 7 in drei weiteren verschiedenen Positionen. Gleiche Merkmale tragen die gleichen Bezugszeichen wie zuvor. Insoweit wird zur Vermeidung von Wiederholungen insbesondere auf die vorangegangene Figur 4 verwiesen, deren Beschreibung hier entsprechend übertragbar ist.

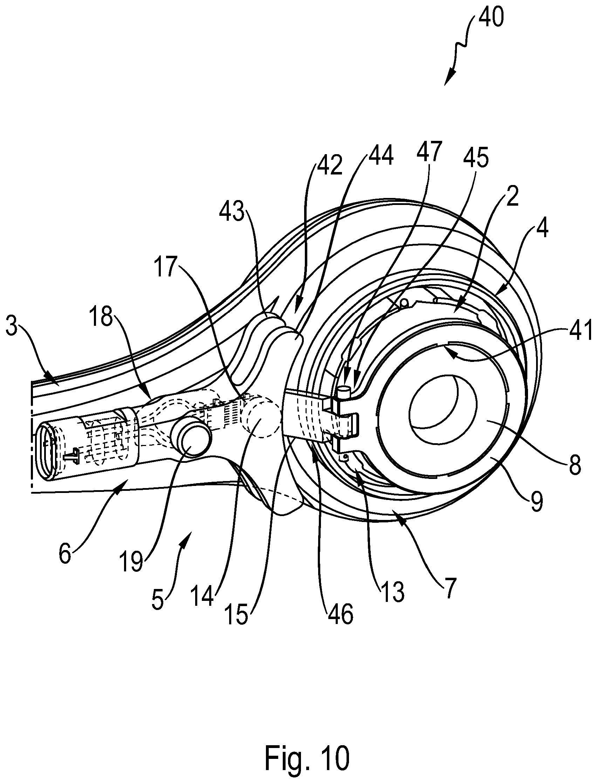

Figur 10 zeigt einen Ausschnitt einer perspektivischen und teilweise transparenten Seitenansicht eines erfindungsgemäßen weiteren Fahrwerkbauteils 40. Gleiche Merkmale wie zuvor tragen die gleichen Bezugszeichen. Insoweit wird zur Vermeidung von Wiederholungen auch auf die vorangegangene Beschreibung verwiesen.

Bei diesem Ausführungsbeispiel weist das Fahrwerkbauteil 40 keine Verdrehsicherung 10 auf. Stattdessen weist der Halteabschnitt 9 des zweiten Messelementes 7 gemäß diesem Ausführungsbeispiel an seinem Innenumfang mehrere Halteelemente 41 auf. Bei diesem Ausführungsbeispiel sind insgesamt vier Halteelemente 41 gleichmäßig am Innenumfang des ringartigen Halteabschnitts 9 verteilt angeordnet. Die Halteelemente 41 sind hierbei beispielhaft als Fixiernasen und einstückig mit dem Halteabschnitt 9 ausgebildet. Mittels der Halteelemente 41 ist das zweite Messelement 7 auf den Außenumfang des Abschnitts 8 des Gelenkinnenteils 2 aufgepresst und zugleich rotationsfest in Bezug zum Gelenkinnenteil 2 an diesem gehalten. Bei diesem Ausführungsbeispiel kann im Unterschied zu den Varianten gemäß Figuren 1 bis 9 auf ein gerichtetes Einpressen des mittels des Gelenkinnenteils, des Gummilagers 23 und der Außenhülse 26 gebildeten Gelenks verzichtet werden.

Bei diesem Ausführungsbeispiel weist das erste Messelement 6 eine Führung 42 auf. Die Führung 42 ist bei diesem Ausführungsbeispiel mittels zweier gebogener und in axialer Richtung zur Mittellängsachse des Gelenkinnenteils 2 voneinander beabstandeter Schenkel 43, 44 gebildet. Die Führung 42 ist an einem dem zweiten Messelement 7 zugewandten Ende des ersten Messelementes 6 ausgebildet. Innerhalb der Führung 42 ist der Magnet 14 des zweiten Messelementes 7 geführt. Somit ist der Magnet 14 zwischen den beiden Schenkeln 43, 44 geführt.

Der stegartige Vorsprung 13 ist bei diesem Ausführungsbeispiel aus einem ersten Vorsprungabschnitt 45 und einem zweiten Vorsprungabschnitt 46 gebildet. Die beiden Vorsprungabschnitte 45, 46 sind mittels eines Scharniers 47 schwenkbeweglich miteinander verbunden. Der zweite Verbindungsabschnitt 46 bildet gemäß diesem Ausführungsbeispiel zugleich den Magnethalter 15, wobei der Magnet 14 im Bereich eines von dem Scharnier 47 abgewandten freien Endes des zweiten Vorsprungabschnittes 46 angeordnet ist.

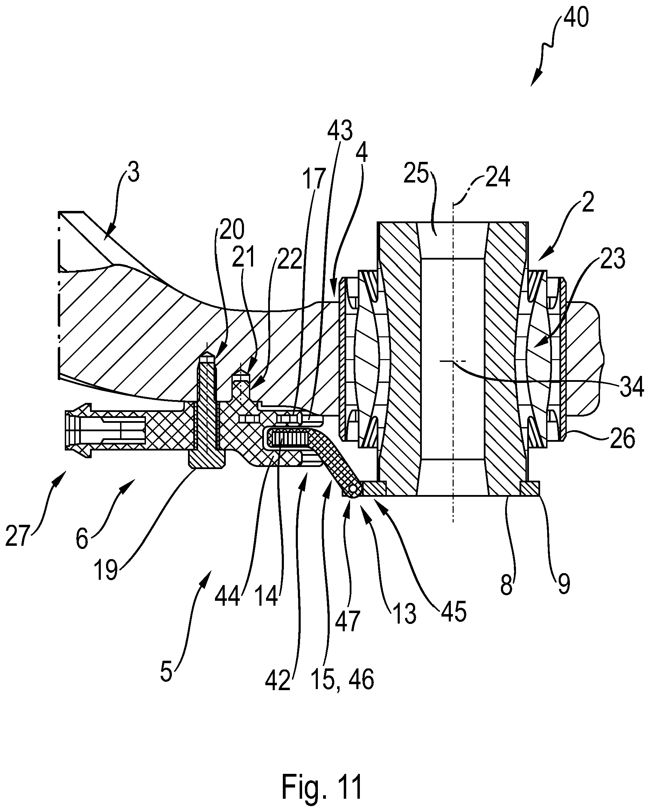

Figur 11 zeigt einen Ausschnitt einer geschnittenen Seitenansicht des erfindungsgemäßen weiteren Fahrwerkbauteils 40 gemäß Figur 10. Gleiche Merkmale wie zuvor tragen die gleichen Bezugszeichen. Insoweit wird zur Vermeidung von Wiederholungen auch auf die vorangegangene Beschreibung verwiesen.

Der Magnetfeldsensor 17 des ersten Messelementes 6 ist innerhalb des Schenkels 43 der Führung 42 angeordnet. Die Führung 42 ermöglicht ein Verdrehen des zweiten Messelementes 7 bzw. des Magneten 14 um die Mittellängsachse 24 des Gelenkinnenteils 2. Zugleich verhindert bzw. reduziert die Führung 42 ein Kippen des Magneten 14 in eine Richtung axial zu der Mittellängsachse 24. Hierbei wird eine Kippbewegung des Gelenkinnenteils 2 um die rechtwinklig zur Mittellängsachse 24 ausgerichtete Drehachse 34 mittels des Scharniers 47 ausgeglichen. Hierzu ist eine Schwenkachse des Scharniers 47 parallel zur Drehachse 34 ausgerichtet.

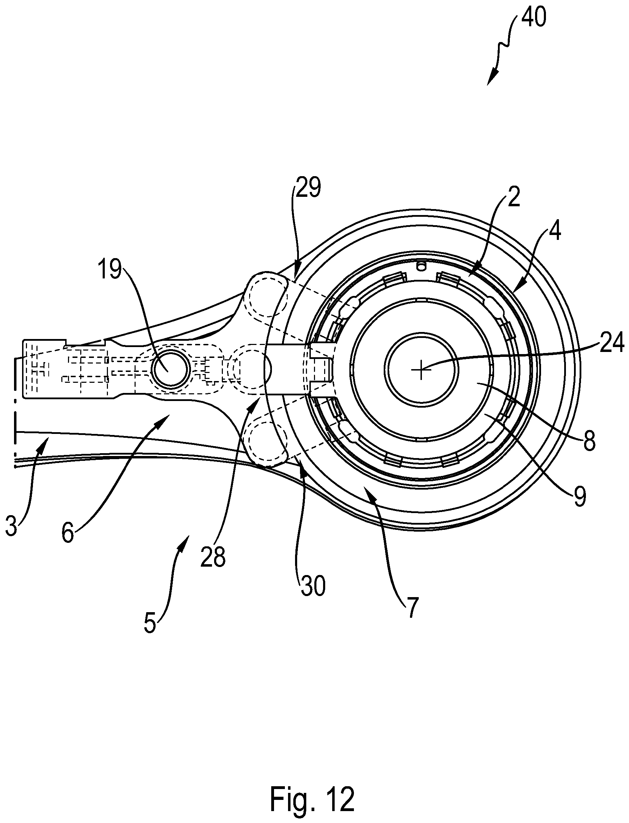

Figur 12 zeigt einen Ausschnitt einer teilweise transparenten Draufsicht auf das erfindungsgemäße weitere Fahrwerkbauteil 40 gemäß Figuren 10 und 11 mit dem zweiten Messelement 7 in drei verschiedenen Positionen. Gleiche Merkmale tragen die gleichen Bezugszeichen wie zuvor. Zur Vermeidung von Wiederholungen wird insbesondere auf die vorangegangene Beschreibung zu den Figuren 3 und 8 verwiesen.

Bei diesem Ausführungsbeispiel weist das erste Messelement 6 einen einzelnen Magnetfeldsensor 17 auf. Alternativ kann das erste Messelement 6 mehrere, insbesondere drei Magnetfeldsensoren 17 aufweisen. Beispielsweise kann, wie hier bereits dargestellt, ein einzelner Magnetfeldsensor 17 mittig innerhalb der Führung 42 des ersten Messelementes 6 angeordnet sein. Hierbei ist ein Abstand zwischen dem mittigen Magnetfeldsensor 17 und dem Magneten 14 in der hier dargestellten Ausgangsposition 28 am kleinsten.

Zusätzlich kann das erste Messelement 6 zwei hier nicht näher dargestellte weitere Magnetfeldsensoren 17 aufweisen. Hierbei kann ein zweiter Magnetfeldsensor 17 derart an dem ersten Messelement 6 und innerhalb der Führung 42 angeordnet sein, so dass der Abstand zwischen dem zweiten Magnetfeldsensor 17 und dem Magnet 14 in der hier dargestellten ersten Endposition 29 am kleinsten ist. Ein dritter hier nicht näher dargestellter Magnetfeldsensor 17 kann derart an dem ersten Messelement 6 und innerhalb der Führung 42 angeordnet sein, so dass ein Abstand zwischen dem dritten Magnetfeldsensor 17 und dem Magneten 14 in der hier dargestellten zweiten Endposition 30 am kleinsten ist.

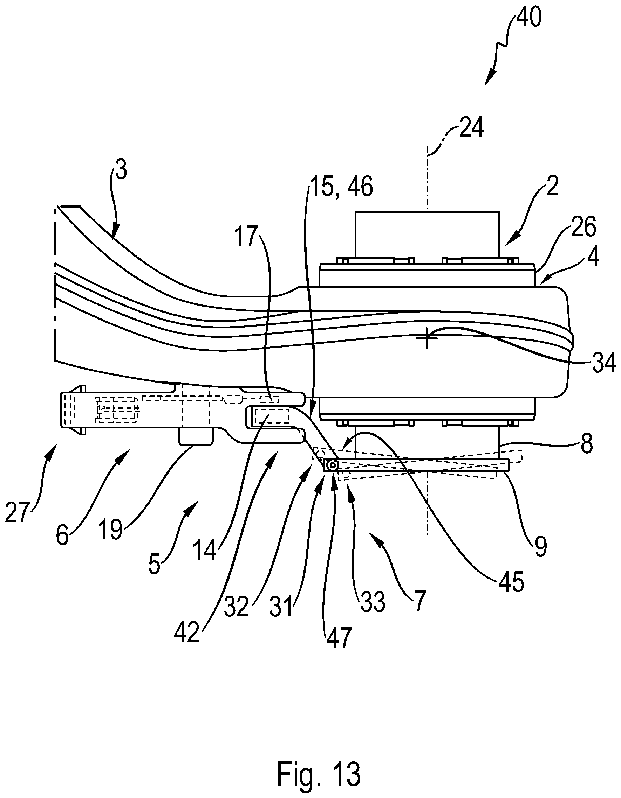

Figur 13 zeigt einen Ausschnitt einer teilweise transparenten Seitenansicht des erfindungsgemäßen weiteren Fahrwerkbauteils 40 gemäß Figuren 10 und 11 mit dem zweiten Messelement 7 in drei weiteren verschiedenen Positionen. Gleiche Merkmale tragen die gleichen Bezugszeichen wie zuvor. Insoweit wird zur Vermeidung von Wiederholungen auch auf die vorangegangene Beschreibung, insbesondere gemäß Figuren 4 und 9 verwiesen.

Bei einer Kippbewegung des Gelenkinnenteils 2 um die Drehachse 34 verkippt auch der Halteabschnitt 9 sowie der erste Vorsprungabschnitt 45. Aufgrund des Scharniers 47 sowie der Führung des zweiten Vorsprungabschnittes 46 bzw. des Magnethalters 15 innerhalb der Führung 42 wird eine Verlagerung des Magneten 14 in eine Richtung axial zur Mittellängsachse 24 jedoch verhindert bzw. mindestens teilweise kompensiert bzw. ausgeglichen.

### Bezugszeichen

- 1: Fahrwerkbauteil
- 2: Gelenkinnenteil
- 3: Strukturteil
- 4: Gelenkaufnahme
- 5: Messeinrichtung
- 6: erstes Messelement
- 7: zweites Messelement
- 8: Abschnitt
- 9: Halteabschnitt
- 10: Verdrehsicherung
- 11: Abflachung
- 12: weitere Abflachung
- 13: stegartiger Vorsprung
- 14: Magnet
- 15: Magnethalter
- 16: Loch
- 17: Magnetfeldsensor
- 18: Oberflächenabschnitt
- 19: Befestigungsmittel
- 20: Befestigungsaufnahme
- 21: Ausrichtaufnahme
- 22: Ausrichtelement
- 23: Gummilager
- 24: Mittellängsachse
- 25: Durchgangsöffnung
- 26: Außenhülse
- 27: Steckerabschnitt
- 28: Ausgangsposition
- 29: Endposition
- 30: Endposition
- 31: Ausgangsposition
- 32: Endposition
- 33: Endposition
- 34: Drehachse
- 35: Steck-/Rastverbindung
- 36: Formschlusselement
- 37: Formschlusselement
- 38: Fahrwerkbauteil
- 39: Seite
- 40: Fahrwerkbauteil
- 41: Halteelement
- 42: Führung
- 43: Schenkel
- 44: Schenkel
- 45: erster Vorsprungabschnitt
- 46: zweiter Vorsprungabschnitt
- 47: Scharnier

- A: Abstand

## Patentansprüche

1. Fahrwerkbauteil mit einem Gelenkinnenteil (2) und mit einem Strukturteil (3), wobei das Gelenkinnenteil (2) in einer Gelenkaufnahme (4) des Strukturteils (3) gelenkbeweglich gelagert ist, und mit einer Messeinrichtung (5) zum Bestimmen einer relativen Lage des Gelenkinnenteils (2) in Bezug zum Strukturteil (3), wobei die Messeinrichtung (5) ein erstes Messelement (6) und ein zweites Messelement (7) aufweist, und das erste Messelement (6) am Strukturteil (3) und das zweite Messelement (7) am Gelenkinnenteil (2) angeordnet ist, wobei sich das Gelenkinnenteil (2) aus der Gelenkaufnahme (4) heraus erstreckt, wobei das zweite Messelement (7) an einem sich außerhalb der Gelenkaufnahme (4) befindenden Abschnitt (8) des Gelenkinnenteils (2) befestigt ist, wobei das zweite Messelement (7) mindestens teilweise innerhalb einer Führung (42) des ersten Messelementes (6) geführt ist, wobei mittels der Führung (42) ein Verdrehen des zweiten Messelementes (7) um eine Mittellängsachse (24) des Gelenkinnenteils (2) ermöglicht ist und zugleich ein Verkippen mindestens eines Teils des zweiten Messelementes (7) axial zu der Mittellängsachse (24) mindestens teilweise kompensiert, ausgeglichen und/oder blockiert wird, **dadurch gekennzeichnet, dass** ein stegartiger Vorsprung (13) des zweiten Messelementes (7) einen ersten Vorsprungabschnitt (45) und einen zweiten Vorsprungabschnitt (46) aufweist, die mittels eines Scharniers (47) schwenkbeweglich zum Ausgleich einer Kippbewegung des zweiten Messelementes (7) axial zur Mittellängsachse (24) verbunden sind.

2. Fahrwerkbauteil nach Anspruch 1, **dadurch gekennzeichnet, dass** das erste Messelement (6) an einer Oberfläche und/oder einem ebenen Oberflächenabschnitt (18) des Strukturteils (3), insbesondere benachbart zu der Gelenkaufnahme (4), befestigt ist, vorzugsweise weist das Strukturteil (3) eine Befestigungsaufnahme (20) zum Befestigen des ersten Messelementes (6) an der Oberfläche und/oder an dem ebenen Oberflächenabschnitt (18) mit einem mit der Befestigungsaufnahme (20) zusammenwirkenden Befestigungsmittel (19) auf.

3. Fahrwerkbauteil nach Anspruch 1 oder 2, **dadurch gekennzeichnet, dass** das erste Messelement (6) ein Ausrichtelement (22) zum gerichteten Anordnen und/oder Befestigen an dem Strukturteil (3) aufweist, insbesondere ist das Ausrichtelement (22) formschlüssig in eine Ausrichtaufnahme (21) des Strukturteils (3) aufgenommen und/oder eingesteckt.

4. Fahrwerkbauteil nach einem der vorhergehenden Ansprüche, **dadurch gekennzeichnet, dass** der Abschnitt (8) des Gelenkinnenteils (2) mit dem zweiten Messelement (7) als ein, insbesondere gestuftes, freies Ende des Gelenkinnenteils (2) ausgebildet ist, vorzugsweise ist ein ringartiger Halteabschnitt (9) des zweiten Messelementes (7) auf den Abschnitt (8) des Gelenkinnenteils (2) und/oder auf einen Außenumfang des Abschnittes (8) des Gelenkinnenteils (2) aufgesteckt und/oder aufgepresst.

5. Fahrwerkbauteil nach einem der vorhergehenden Ansprüche, **dadurch gekennzeichnet, dass** das zweite Messelement (7), insbesondere ein Halteabschnitt (9) des zweiten Messelementes (7), und der mit dem zweiten Messelement (7) zusammenwirkende Abschnitt (8) des Gelenkinnenteils (2) eine Verdrehsicherung (10) zum Verhindern und/oder Blockieren einer Relativbewegung und/oder Rotation des zweiten Messelementes (7) in Bezug zum Gelenkinnenteil (2) ausbilden, vorzugsweise ist die Verdrehsicherung (10) mittels mindestens einer Abflachung (11) an einem Außenumfang des Abschnittes (8) des Gelenkinnenteils (2) ausgebildet, die mit einer korrespondierend ausgebildeten weiteren Abflachung (12) an einem Innenumfang des zweiten Messelementes (7), insbesondere des Halteabschnittes (9) des zweiten Messelementes (7), zusammenwirkt.

6. Fahrwerkbauteil nach einem der vorhergehenden Ansprüche, **dadurch gekennzeichnet, dass** das erste Messelement (6) mindestens einen Magnetfeldsensor (17), insbesondere mehrere Magnetfeldsensoren (17), und das zweite Messelement (7) einen Magnet (14) aufweist, wobei der Magnet (14) an einem freien Ende des stegartigen Vorsprungs (13) des zweiten Messelementes (7) angeordnet und dem ersten Messelement (6) zugewandt ist, vorzugsweise erstreckt sich der stegartige Vorsprung (13) in radialer Richtung von einem Halteabschnitt (9) des zweiten Messelementes (7) über einen Außenumfang des Gelenkinnenteils (2) hinaus nach außen.

7. Fahrwerkbauteil nach Anspruch 6, **dadurch gekennzeichnet, dass** der Magnet (14) innerhalb eines Magnethalters (15) aus Kunststoff angeordnet und/oder gekapselt ist, insbesondere ist der Magnet (14) und/oder der Magnethalter (15) mittels einer lösbaren Steck- und/oder Rastverbindung (35) an dem stegartigen Vorsprung (13) befestigt oder ist der Magnethalter (15) mittels eines Spritzgussverfahrens unmittelbar an dem stegartigen Vorsprung (13) hergestellt und/oder angespritzt.

8. Fahrwerkbauteil nach einem der Ansprüche 1 - 5, **dadurch gekennzeichnet, dass** ein Magnet (14) des zweiten Messelementes (7) mindestens teilweise innerhalb der Führung (42) des ersten Messelementes (6) geführt ist, wobei mittels der Führung (42) ein Verdrehen des zweiten Messelementes (7) um die Mittellängsachse (24) des Gelenkinnenteils (2) ermöglicht ist und zugleich ein Verkippen des Magneten (14) des zweiten Messelementes (7) axial zu der Mittellängsachse (24) mindestens teilweise kompensiert, ausgeglichen und/oder blockiert wird.

9. Fahrwerkbauteil nach einem der vorhergehenden Ansprüche, **dadurch gekennzeichnet, dass** das Gelenkinnenteil (2) als eine Kugelhülse, als eine Gelenkhülse oder als ein Gummilager ausgebildet ist, insbesondere ist das Fahrwerkbauteil (1, 38, 40) als ein Lenker ausgebildet.

## Claims

1. Chassis component having an articulated inner part (2) and having a structural part (3), wherein the articulated inner part (2) is mounted in an articulated manner in a joint receptacle (4) of the structural part (3), and having a measuring device (5) for determining a relative position of the articulated inner part (2) in relation to the structural part (3), wherein the measuring device (5) has a first measuring element (6) and a second measuring element (7), and the first measuring element (6) is disposed on the structural part (3) and the second measuring element (7) is disposed on the articulated inner part (2), wherein the articulated inner part (2) extends out of the joint receptacle (4), wherein the second measuring element (7) is fastened to a portion (8) of the articulated inner part (2) which is located outside the joint receptacle (4), wherein the second measuring element (7) is guided at least partially within a guide (42) of the first measuring element (6), wherein by means of the guide (42) a rotation of the second measuring element (7) about a central longitudinal axis (24) of the articulated inner part (2) is enabled, and at the same time axial tilting of at least part of the second measuring element (7) in relation to the central longitudinal axis (24) is at least partially compensated, equalized and/or blocked,
**characterized in that** a web-like projection (13) of the second measuring element (7) has a first projection portion (45) and a second projection portion (46) which by means of a hinge (47) are pivotably connected so as to compensate for an axial tilting movement of the second measuring element (7) in relation to the central longitudinal axis (24).

2. Chassis component according to Claim 1, **characterized in that** the first measuring element (6) is fastened to a surface and/or a flat surface portion (18) of the structural part (3), in particular so as to be adjacent to the joint receptacle (4), the structural part (3) preferably having a fastening receptacle (20) for fastening the first measuring element (6) to the surface and/or to the flat surface portion (18) by way of a fastening means (19) interacting with the fastening receptacle (20).

3. Chassis component according to Claim 1 or 2, **characterized in that** the first measuring element (6) has an alignment element (22) for the aligned arrangement on and/or fastening to the structural part (3), the alignment element (22) in particular being received and/or inserted in a form-fitting manner in an alignment receptacle (21) of the structural part (3).

4. Chassis component according to one of the preceding claims, **characterized in that** the portion (8) of the articulated inner part (2), conjointly with the second measuring element (7), is designed as an in particular stepped free end of the articulated inner part (2), an annular retaining portion (9) of the second measuring element (7) preferably being pushed onto, or press-fitted on, the portion (8) of the articulated inner part (2) and/or onto or on an external circumference of the portion (8) of the articulated inner part (2).

5. Chassis component according to one of the preceding claims, **characterized in that** the second measuring element (7), in particular a retaining portion (9) of the second measuring element (7), and the portion (8) of the articulated inner part (2) that interacts with the second measuring element (7), form an anti-rotation safeguard (10) for preventing and/or blocking a relative movement and/or rotation of the second measuring element (7) in relation to the articulated inner part (2), the anti-rotation safeguard (10) preferably being formed by means of at least one flattening (11) on an external circumference of the portion (8) of the articulated inner part (2) that interacts with a correspondingly designed further flattening (12) on an internal circumference of the second measuring element (7), in particular of the retaining portion (9) of the second measuring element (7) .

6. Chassis component according to one of the preceding claims, **characterized in that** the first measuring element (6) has at least one magnetic field sensor (17), in particular a plurality of magnetic field sensors (17), and the second measuring element (7) has a magnet (14), wherein the magnet (14) is disposed on a free end of the web-like projection (13) of the second measuring element (7) and faces the first measuring element (6), the web-like projection (13) preferably extending in the radial direction from a retaining portion (9) of the second measuring element (7) outwards beyond an external circumference of the articulated inner part (2).

7. Chassis component according to Claim 6, **characterized in that** the magnet (14) is disposed and/or encapsulated within a magnet holder (15) made of plastic, the magnet (14) and/or the magnet holder (15) in particular being fastened to the web-like projection (13) by means of a releasable plug-in and/or latching connection (35), or the magnet holder (15) being produced and/or overmoulded directly on the web-like projection (13) by means of an injection-moulding method.

8. Chassis component according to one of Claims 1 to 5, **characterized in that** a magnet (14) of the second measuring element (7) is guided at least partially within the guide (42) of the first measuring element (6), wherein a rotation of the second measuring element (7) about the central longitudinal axis (24) of the articulated inner part (2) is enabled by means of the guide (42), and at the same time axial tilting of the magnet (14) of the second measuring element (7) in relation to the central longitudinal axis (24) is at least partially compensated, equalized and/or blocked.

9. Chassis component according to one of the preceding claims, **characterized in that** the articulated inner part (2) is designed as a ball sleeve, as a joint sleeve or as a rubber bearing, the chassis component (1, 38, 40) in particular being designed as a control arm.

## Revendications

1. Composant de châssis, comprenant une partie intérieure d'articulation (2) et une partie structurelle (3), dans lequel la partie intérieure d'articulation (2) est montée dans un logement d'articulation (4) de la partie structurelle (3) pour un mouvement articulé, et comprenant un dispositif de mesure (5) pour déterminer une position relative de la partie intérieure d'articulation (2) par rapport à la partie structurelle (3), dans lequel le dispositif de mesure (5) présente un premier élément de mesure (6) et un deuxième élément de mesure (7), et le premier élément de mesure (6) est disposé sur la partie structurelle (3) et le deuxième élément de mesure (7) est disposé sur la partie intérieure d'articulation (2), dans lequel la partie intérieure d'articulation (2) s'étend hors du logement d'articulation (4), dans lequel le deuxième élément de mesure (7) est fixé à une portion (8) de la partie intérieure d'articulation (2), se trouvant à l'extérieur du logement d'articulation (4), dans lequel le deuxième élément de mesure (7) est guidé au moins partiellement à l'intérieur d'une coulisse (42) du premier élément de mesure (6), dans lequel la coulisse (42) permet une torsion du deuxième élément de mesure (7) autour d'un axe longitudinal central (24) de la partie intérieure d'articulation (2) tout en compensant, équilibrant et/ou bloquant au moins partiellement un basculement d'au moins une partie du deuxième élément de mesure (7) axialement par rapport à l'axe longitudinal central (24),
**caractérisé en ce qu'**une saillie (13) en forme d'entretoise du deuxième élément de mesure (7) présente une première portion de saillie (45) et une deuxième portion de saillie (46) qui sont reliées au moyen d'une charnière (47) pour un mouvement articulé afin de compenser un mouvement de basculement du deuxième élément de mesure (7) axialement par rapport à l'axe longitudinal central (24).

2. Composant de châssis selon la revendication 1, **caractérisé en ce que** le premier élément de mesure (6) est fixé à une surface et/ou à une portion de surface plane (18) de la partie structurelle (3), en particulier de manière voisine au logement d'articulation (4), la partie structurelle (3) présentant de préférence un logement de fixation (20) pour fixer le premier élément de mesure (6) à la surface et/ou à la portion de surface plane (18) par un moyen de fixation (19) coopérant avec le logement de fixation (20).

3. Composant de châssis selon la revendication 1 ou 2, **caractérisé en ce que** le premier élément de mesure (6) présente un élément d'alignement (22) pour la disposition et/ou fixation directionnelle(s) à la partie structurelle (3), l'élément d'alignement (22) étant en particulier reçu et/ou inséré par complémentarité de forme dans un logement d'alignement (21) de la partie structurelle (3).

4. Composant de châssis selon l'une quelconque des revendications précédentes, **caractérisé en ce que** la portion (8) de la partie intérieure d'articulation (2) est réalisée avec le deuxième élément de mesure (7) sous la forme d'une extrémité libre, en particulier étagée, de la partie intérieure d'articulation (2), une portion de retenue (9) de forme annulaire du deuxième élément de mesure (7) étant de préférence emboîtée et/ou emmanchée sur la portion (8) de la partie intérieure d'articulation (2) et/ou sur une circonférence extérieure de la portion (8) de la partie intérieure d'articulation (2).

5. Composant de châssis selon l'une quelconque des revendications précédentes, **caractérisé en ce que** le deuxième élément de mesure (7), en particulier une portion de retenue (9) du deuxième élément de mesure (7), et la portion (8) de la partie intérieure d'articulation (2) coopérant avec le deuxième élément de mesure (7) réalisent un dispositif antirotation (10) pour empêcher et/ou bloquer un mouvement relatif et/ou une rotation du deuxième élément de mesure (7) par rapport à la partie intérieure d'articulation (2), le dispositif antirotation (10) étant de préférence réalisé au moyen d'au moins un méplat (11) sur une circonférence extérieure de la portion (8) de la partie intérieure d'articulation (2) qui coopère avec un méplat (12) supplémentaire, réalisé de manière correspondante, sur une circonférence intérieure du deuxième élément de mesure (7), en particulier de la portion de retenue (9) du deuxième élément de mesure (7).

6. Composant de châssis selon l'une quelconque des revendications précédentes, **caractérisé en ce que** le premier élément de mesure (6) présente au moins un capteur de champ magnétique (17), en particulier plusieurs capteurs de champ magnétique (17), et le deuxième élément de mesure (7) présente un aimant (14), dans lequel l'aimant (14) est disposé à une extrémité libre de la saillie (13) en forme d'entretoise du deuxième élément de mesure (7) et est tourné vers le premier élément de mesure (6), la saillie (13) en forme d'entretoise s'étendant de préférence dans la direction radiale d'une portion de retenue (9) du deuxième élément de mesure (7) au-delà d'une circonférence extérieure de la partie intérieure d'articulation (2) vers l'extérieur.

7. Composant de châssis selon la revendication 6, **caractérisé en ce que** l'aimant (14) est disposé et/ou encapsulé à l'intérieur d'un support d'aimant (15) en matière plastique, l'aimant (14) et/ou le support d'aimant (15) étant en particulier fixé(s) au moyen d'un assemblage d'insertion et/ou d'encliquetage (35) amovible à la saillie (13) en forme d'entretoise ou le support d'aimant (15) étant fabriqué et/ou surmoulé au moyen d'un procédé de moulage par injection directement au niveau de la saillie (13) en forme d'entretoise.

8. Composant de châssis selon l'une quelconque des revendications 1 à 5, **caractérisé en ce qu'**un aimant (14) du deuxième élément de mesure (7) est guidé au moins partiellement à l'intérieur de la coulisse (42) du premier élément de mesure (6), dans lequel la coulisse (42) permet une torsion du deuxième élément de mesure (7) autour de l'axe longitudinal central (24) de la partie intérieure d'articulation (2) tout en compensant, équilibrant et/ou bloquant au moins partiellement un basculement de l'aimant (14) du deuxième élément de mesure (7) axialement par rapport à l'axe longitudinal central (24).

9. Composant de châssis selon l'une quelconque des revendications précédentes, **caractérisé en ce que** la partie intérieure d'articulation (2) est réalisée sous la forme d'un manchon sphérique, d'un manchon d'articulation ou d'un palier en caoutchouc, le composant de châssis (1, 38, 40) étant en particulier réalisé sous forme de bielle.
